# EUROPEAN PATENT APPLICATION

(11) **EP 2 618 231 A2**
(43) Date of publication of application: **24.07.2013**
(21) Application number: 13151952.2
(22) Date of filing: 18.01.2013
(51) Int. Cl.: G05B 23/02

(54) **System and method for monitoring, diagnostics, and prognostics**

(30) Priority: 20.01.2012 US 201213354431
(71) Applicant: General Electric Company, Schenectady, New York 12345 (US)
(72) Inventor: Jiang, Xiaomo, Atlanta, GA 30339 (US); Fisher, William Theadore, Atlanta, GA 30339 (US); Foster, Craig Joseph, Atlanta, GA 30339 (US); Wang, Difei, Atlanta, GA 30339 (US); Yarnold, Michael Wesley, Atlanta, GA 30339 (US)
(74) Representative: Picker, Madeline Margaret

(57) **Abstract**

A monitoring and diagnostic (M&D) center includes continuous monitoring systems (CMS) for one or more remote sites. Measurement data taken at the remote site(s) is used to generate and analyze output. An on-site validation tool performs diagnostics and prognostics with output generated over different periods of time with different algorithms to generate recommendations regarding hardware upgrades, design improvements, or modified maintenance schedule.

## Description

### BACKGROUND OF THE INVENTION

The subject matter disclosed herein relates to enhanced monitoring, diagnostics, and prognostics of systems.

Site-specific performance monitoring systems are used to diagnose and report issues of a system. The monitoring may be done remotely for several on-site systems from a central location. For example, power plant operations at one or more power plant sites may be remotely monitored from a central Monitoring and Diagnostics (M&D) center. Continuous monitoring systems (CMS) implement the performance calculation of a given site at the M&D center.

Currently, when an unexpected or abnormal result is produced by a monitoring system, it is difficult to ascertain whether the result is due to issues in the site system being monitored, the monitoring system, or the measurement devices providing inputs to the monitoring system. Further, system operating issues that cause the result cannot be distinguished from site system degradation or damage based on current CMS. Thus, a system and method that at least validates the inputs, algorithms, and outputs in the monitoring system and includes troubleshooting of the site system would be appreciated in the art.

### BRIEF DESCRIPTION OF THE INVENTION

According to one aspect of the invention, a system for monitoring and performing diagnostics and prognostics of a performance site includes one or more measurement devices configured to measure one or more parameters of the performance site; and a processor configured to validate the one or more parameters, determine an output of the performance site based on the one or more parameters, perform diagnostics and prognostics based on the one or more parameters and the output, and generate a recommendation.

According to another aspect of the invention, a method for monitoring, diagnostics, and prognostics of a system includes measuring one or more parameters of the system periodically; validating the one or more parameters; calculating a first plurality of output values of the system based on the one or more parameters being collected over a first period of time; performing troubleshooting of the system based on an analysis of the first plurality of output values to identify an unexpected output value among the first plurality of output values and a source of the unexpected output value; diagnosing a degradation source in the system based on the troubleshooting and generating a prognosis of future performance of the system; and generating a recommendation regarding maintenance of the system based on the diagnosing and the prognosis.

According to yet another aspect of the invention, a computer-readable medium stores instructions that, when processed by a processor, cause the processor to execute a method for monitoring, diagnostics, and prognostics of a system. The method includes measuring one or more parameters of the system periodically; validating the one or more parameters; calculating a first plurality of output values of the system based on the one or more parameters being collected over a first period of time; performing troubleshooting of the system based on an analysis of the first plurality of output values to identify an unexpected output value among the first plurality of output values and a source of the unexpected output value; diagnosing a degradation source in the system based on the troubleshooting and generating a prognosis of future performance of the system; and generating a recommendation regarding maintenance of the system based on the diagnosing and the prognosis.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a block diagram of a system with monitoring, diagnostics, and prognostics according to an embodiment of the present invention; and
FIG. 2 shows processes performed by the system shown at FIG. 1.

The detailed description explains embodiments of the invention, together with advantages and features, by way of example with reference to the drawings.

### DETAILED DESCRIPTION OF EMBODIMENTS OF THE INVENTION

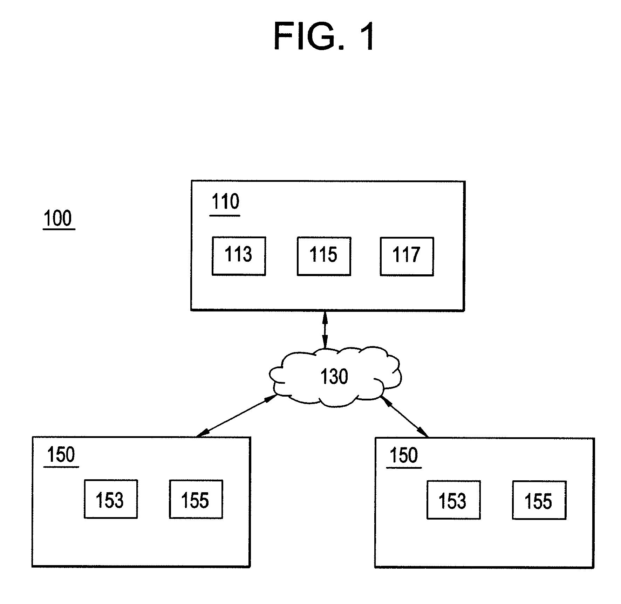

FIG. 1 is a block diagram of a system 100 with monitoring, diagnostics, and prognostics according to an embodiment of the present invention. The system 100 includes a center 110 and one or more site systems 150 that communicate with the center 110 via a network 130. The site system 150 may be, for example, a power plant that has its performance monitored remotely by the center 110.

The center 110 includes a processor 113, a memory device 115, and a communication unit 117. Each of the processor 113 and the memory device 115 may, in fact, be comprised of a plurality of elements (plurality of processors 113 and memory devices 115) that are in communication with each other. The communication unit 117 communicates through the network 130 with the one or more site systems 150. The communication unit 117 may also allow communication with the center 110 from a different user site (not shown). In one embodiment, the processor 113 performs the same operation (continuous monitoring operation) regardless of the specific site system 150 from which data originates or may perform customized or data-dependent operations. The processor 113 performs continuous monitoring in accordance with known CMS. In an alternate embodiment according to the invention, the processor 113 includes additional diagnostic and prognostic functionality beyond that of a CMS.

The site system 150 includes one or more measurement devices 153 that measure the parameters used to monitor and diagnose the site system 150. Each measurement device 153 collects data at regular intervals (e.g., every 5 minutes). The collected data is stored for use by the validation tool 155 at the site system 150 and also transmitted to the center 110 to facilitate the CMS operation. According to the present embodiment of the invention, the site system 150 also includes a validation tool 155. The validation tool 155 may be comprised of one or more processors with one or more memory devices storing inputs, outputs, and instructions to be executed by the processor(s). In one embodiment, the validation tool 155 is in the form of a desktop tool at the site system 150 that is centrally controlled or web-based and, in addition to diagnostic and prognostic operations, the validation tool 155 simulates many or all of the models and operations performed at the center 110. In one embodiment, the validation tool 155 works alone. In an alternate embodiment, the validation tool 155 works in conjunction with the center 110 to provide a comprehensive monitoring, diagnostics, and prognostics system.

In one embodiment, the validation tool 155 acts as a check for the center 110 CMS by simulating site system 150 operation offline. The validation tool 155 examines the data collected by the measurement devices 153 and used by the center 110 CMS to identify invalid (out of an expected range or with a larger gap as compared to previous values than expected) data from the measurement devices 153. The validation tool 155 replaces invalid values in order to obtain and validate output. By using data used by the center 110 CMS and comparing output of models with center 110 CMS output, the validation tool 155 identifies anomalies in the site system 150 such as more rapid degradation than predicted or degradation exceeding a certain threshold, for example. Based on its severity and other factors, the degradation may indicate a hardware failure. As noted, the additional analysis to determine and analyze anomalies may be performed at the validation tool 155, added to the functionality of the center 110, or may be shared between the two.

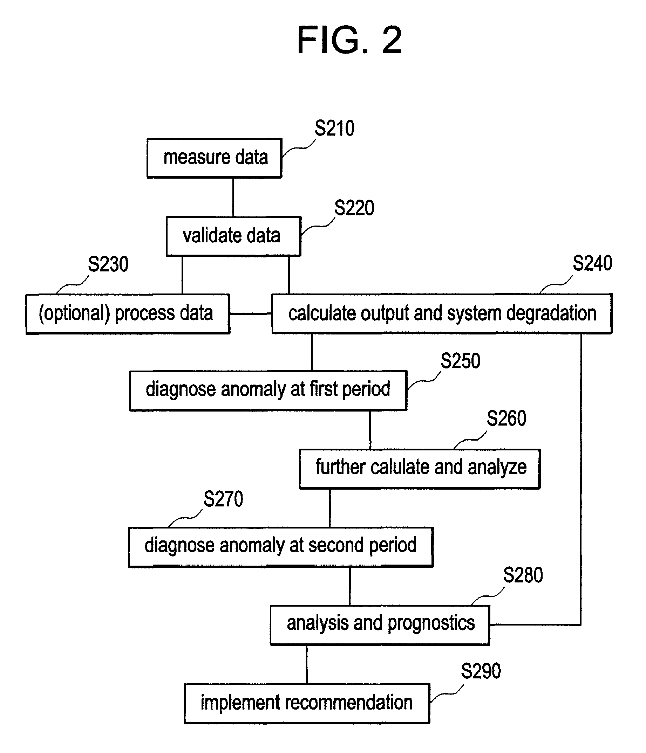

FIG. 2 shows processes performed by the system 100 shown at FIG. 1. The results at any process block may be output to a user. At block S210, measuring data includes measurement devices 153 at a given site system 150 collecting data from sensors of various parameters of the site system 150. For example, when the site system 150 is a power plant, the measurement devices 153 measures, among other things, temperature, heat exhaust, and plant output. At block S220 validating data includes verifying that a particular measurement device 153 output is within an expected range or that two measurements are within a certain gap range of each other. The expected range and gap range may be determined based on models or may be user inputs. When data from a measurement device 153 is determined to be invalid, another value is substituted for the data in order to prevent erroneous results. The substitute data may be a stored default value, an input by a user, or a repeat of the previous valid measured value, for example.

Processing data at S230 includes performing one or more processes, at least some of which are optional depending on the site system 150 and the source of the data itself. For example, the data may be filtered. Further, correction factors may be calculated for the data. For example, for a power plant as an exemplary site system 150, output and heat rate correction factors are calculated and validated data is adjusted according to the correction factors. At block S240, the data (validated and further processed, as needed) is used to determine site system 150 output and degradation. The site system 150 degradation is determined based on comparisons to previous outputs, according to one embodiment, and based on comparisons to target output values, according to another embodiment. The target output values may be based on modeled output values.

As noted above, the site system 150 output and degradation values, like the results of any of the processing blocks, may be output to a user. At a certain period (e.g., daily), anomaly diagnostics are conducted on the site system 150 output and degradation values at block S250. For example, when site system 150 output and degradation values are outside an expected range over the period, an assessment is made as to whether any data is missing. That is, part of the processing at S250 includes determining if data from any particular measurement device 153 was not received at any time over the period. If any anomaly cannot be diagnosed and remedied at block S250, human intervention may be needed and site system 150 data over a longer second period of time may be considered.

At block S260, site system 150 data and degradation values are determined for the second period of time (e.g., a month). The processing at block S260 may also include analyzing and reporting fleet performance (performance of all site systems 150) over the same second period of time. Thus, the one or more algorithms used at block S260 may be different from those used at block S250. By examining performance of the fleet of site systems 150, anomalies in one or more of the site systems 150 are identified. At block S270, anomaly analysis is performed for the data collected over the second period of time, and the root cause is investigated. At this block, part of the processing may include human intervention to ensure that the anomaly is thoroughly addressed.

At block S280, site system 150 performance over time is analyzed with the technical effect of providing diagnostics and prognostics for the site system 150. Specifically, analyzing at S280 includes conducting root cause analysis to determine the underlying cause of performance degradation. In addition, degradation projection may be done as part of the prognostics processing. Statistical analysis or analytics techniques are used to perform the prognostics processing at S280. At block S290, recommendations based on the analysis and prognostics at S280 are reported and implemented. The root cause analysis and prognostics conducted at S280 may lead to recommendations for hardware upgrades, design improvements, or modified maintenance schedule (e.g., increased maintenance cycles).

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A system (100) for monitoring and performing diagnostics and prognostics of a performance site, the system comprising:
one or more measurement devices (153) configured to measure one or more parameters of the performance site; and
a processor (113) configured to validate the one or more parameters, determine an output of the performance site based on the one or more parameters, perform diagnostics and prognostics based on the one or more parameters and the output, and generate a recommendation.

2. The system according to Claim 1, wherein the one or more measurement devices (153) measures the one or more parameters periodically.

3. The system according to Claim 1 or Claim 2, wherein the processor (113) validates each of the one or more parameters based on a comparison with a previous respective one of the one or more parameters.

4. The system according to Claim 1, 2 or 3, wherein the processor validates each of the one or more parameters based on a comparison with an expected value of the one or more parameters, wherein the expected value is preferably based on a model output or the expected value is a user input.

5. The system according to Claim 4, wherein a value is substituted for each of the one or more parameters determined to be invalid.

6. The system according to any preceding Claim, wherein the processor (113) determines a first plurality of output values of the performance site based on a first plurality of the one or more parameters collected over a first period of time.

7. The system according to Claim 6, wherein the processor (113) identifies an anomaly in the first plurality of output values, the anomaly being an unexpected output value among the first plurality of output values.

8. The system according to Claim 7, wherein the unexpected output value is identified based on at least one of: a model of the system, and a comparison with a previous output value.

9. The system according to any preceding Claim, wherein the processor (113) performing diagnostics and prognostics includes the processor calculating a second plurality of output values of the system based on the one or more parameters being collected over a second period of time.

10. The system according to any preceding Claim, wherein the processor (113) is configured to output a recommendation of a hardware upgrade at the performance site, a design change at the performance site, or increased maintenance cycles of the performance site.

11. A method for monitoring, diagnostics, and prognostics of a system, the method comprising:
measuring one or more parameters of the system periodically;
validating the one or more parameters;
calculating a first plurality of output values of the system based on the one or more parameters being collected over a first period of time;
performing troubleshooting of the system based on an analysis of the first plurality of output values to identify an unexpected output value among the first plurality of output values and a source of the unexpected output value;
diagnosing a degradation source in the system based on the troubleshooting and generating a prognosis of future performance of the system; and
generating a recommendation regarding maintenance of the system based on the diagnosing and the prognosis.

12. The method according to Claim 11, wherein the validating the one or more parameters includes at least one of:
comparing each of the one or more parameters with a previous respective one of the one or more parameters;
comparing each of the one or more parameters with an expected value of the one or more parameters, the expected value being based on a model output or the expected value being a user input, and
substituting a value for each of the one or more parameters determined to be invalid.

13. The method according to Claim 11 or Claim 12, wherein the troubleshooting includes at least one of:
identifying the unexpected output value based on a model of the system, and
identifying the unexpected output value based on a comparison with a previous output value.

14. The method according to Claim 11, 12 or 13 wherein the diagnosing and the generating the prognosis includes calculating a second plurality of output values of the system based on the one or more parameters being collected over a second period of time and generating a recommendation of a hardware upgrade of the system, design change in the system, or modified maintenance schedule of the system.

15. A computer-readable medium storing instructions that, when processed by a processor, cause the processor to execute a method for monitoring, diagnostics, and prognostics of a system according to any one of claims 11 to 14.
